# EUROPÄISCHE PATENTSCHRIFT

(11) **EP 3 554 894 B1**
(45) Veröffentlichungstag und Bekanntmachung des Hinweises auf die Patenterteilung: **07.10.2020**
(21) Anmeldenummer: 17797860.8
(22) Anmeldetag: 03.11.2017
(51) Int. Cl.: B60R 3/02, B61D 23/02

(54) **SCHIEBETRITTANORDNUNG FÜR EIN KRAFTFAHRZEUG ODER FÜR EIN SCHIENENFAHRZEUG**
SLIDING STEP ASSEMBLY FOR A MOTOR VEHICLE OR FOR A RAIL VEHICLE
ENSEMBLE MARCHEPIED COULISSANT POUR VÉHICULE AUTOMOBILE OU POUR VÉHICULE FERROVIAIRE

(30) Priorität: 17.12.2016 DE 102016015128
(43) Veröffentlichungstag der Anmeldung: 23.10.2019
(73) Patentinhaber: Knorr-Bremse Gesellschaft mit beschränkter Haftung, 2340 Mödling (AT)
(72) Erfinder: MAIR, Andreas, A-4372 Hendorf (AT); WILFLINGER, Johann, 4030 Linz (AT)
(74) Vertreter: Wiedemann, Markus
(86) Internationale Anmeldenummer: PCT/EP2017/001277
(87) Internationale Veröffentlichungsnummer: WO 2018/108299

(56) Entgegenhaltungen:
- EP-A1- 1 858 142
- DE-A1- 19 531 284
- DE-A1-102014 203 049

## Beschreibung

Die Erfindung geht aus von einer Schiebetrittanordnung für ein Kraftfahrzeug oder für ein Schienenfahrzeug, gemäß dem Oberbegriff von Anspruch 1. Weiterhin betrifft die Erfindung auch ein Fahrzeug, insbesondere ein Schienenfahrzeug mit wenigstens einer Schiebetrittanordnung gemäß Anspruch 10.

Eine solche Schiebetrittanordnung ist beispielsweise aus DE 10 2014 203 049 A1 oder aus DE 195 31 284 A1 bekannt.

Beispielsweise werden solche Schiebetrittanordnungen bei Fahrzeugen zur Personenbeförderung eingesetzt, um den Zu- und Ausstieg zu erleichtern und um eine Gefährdung von Personen zu vermeiden. Beispielsweise bei einem Schienenfahrzeug dient das Trittbrett der Schiebetrittanordnung zur Überbrückung des Spalts zwischen dem Schienenfahrzeug und einem Bahnsteig, wenn das Schienenfahrzeug in einem Bahnhof hält. Damit wird verhindert, dass Passagiere in den betreffenden Spalt hineintreten. Auch kann das Trittbrett bei Omnibussen dazu dienen, den Spalt zwischen Fahrzeug und einer Bordsteinkante abzudecken. Das Trittbrett kann auch dazu dienen, einen Niveauunterschied zwischen einer Plattform des Fahrzeugs und dem Bahnsteig oder Gehsteig zu überbrücken, um einen Zu- und Ausstieg mit Rollstühlen und Kinderwagen zu erleichtern. Nicht zuletzt kann eine solche Schiebetrittanordnung auch bei Fahrzeugen zur Beförderung von kranken oder behinderten Personen eingesetzt werden, etwa, um durch das ausgefahrene Trittbrett einen Fahrweg für eine fahrbare Krankentrage oder einen Rollstuhl zwischen einer Fahrzeugplattform und einer Straße oder einem Gehweg zu bilden.

Dabei kann das Trittbrett mit Hilfe eines Antriebs zwischen einer eingefahrenen Position (Ruhestellung) und einer ausgefahrenen Position (Arbeitsstellung) hin- und her bewegt werden und ist hierzu beispielsweise an zwei parallel zueinander angeordneten Schienen der Führungseinrichtung geführt. Üblicherweise geschieht die Führung des Trittbretts über Rollen.

Als Antrieb für das Trittbrett werden bisher ausschließlich berührungsbehaftete Antriebe wie beispielsweise Riementriebe, Spindeltriebe oder Pneumatikzylinder verwendet. Durch Verschmutzung, Vereisung, Verformung der Fahrzeugstruktur im Bereich der Schiebetrittanordnung oder infolge von Temperatureinflüssen kann es jedoch zu einem Blockieren eines solchen Antriebs kommen, so dass die Schiebetrittanordnung funktionsunfähig wird. Wird der durch die Schiebetrittanordnung beanspruchte Bauraum auch durch den Antrieb bestimmt. Weiters kann es durch einen sog. Vandalismus zu Zerstörungen bzw. zu Vorschädigungen am Antriebsstrang kommen.

Der vorliegenden Erfindung liegt die Aufgabe zugrunde, eine Schiebetrittanordnung für ein Kraftfahrzeug oder für ein Schienenfahrzeug der eingangserwähnten Art derart weiter zu bilden, dass die oben beschriebenen Probleme vermieden werden. Gleichfalls soll auch ein Fahrzeug, insbesondere ein Schienenfahrzeug mit einer solchen Schiebetrittanordnung zur Verfügung gestellt werden.

Diese Aufgabe wird erfindungsgemäß durch die Merkmale der Ansprüche 1 und 10 gelöst. Vorteilhafte Weiterbildungen der Erfindung sind Gegenstand der beigefügten Unteransprüche.

### Offenbarung der Erfindung

Erfindung geht von einer Schiebetrittanordnung für ein Kraftfahrzeug oder für ein Schienenfahrzeug, mit wenigstens einem Trittbrett, welches durch einen Antrieb angetrieben an einer Führungseinrichtung entlang eines Fahrwegs zwischen einer eingefahrenen Position und einer ausgefahrenen Position beweglich geführt ist. Der Fahrweg schließt dabei die eingefahrene Position und die ausgefahrene Position ausdrücklich ein.

Dabei wird das Trittbrett mit Hilfe des Antriebs zwischen der eingefahrenen Position (Ruhestellung) und der ausgefahrenen Position (Arbeitsstellung) hin- und her bewegt, kann aber auch an einer beliebigen, zwischen der eingefahrenen Position (Ruhestellung) und der vollständig ausgefahrenen Position (Arbeitsstellung) gelegenen Position gestoppt und dort gehalten werden.

Der bevorzugte Einsatz der Schiebetrittanordnung ist in einem Schienenfahrzeug. Darunter ist ein spurgebundenes Fahrzeug zu verstehen, wie eine Lokomotive, ein Triebzug, ein Treibwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug. Alternativ kann die Schiebetrittanordnung für jede andere Art von Fahrzeug eingesetzt werden, welche insbesondere für einen Transport von Personen vorgesehen sind, beispielsweise auch für Omnibusse, Krankentransportfahrzeuge, Behindertentransportfahrzeuge etc..

Die Erfindung ist dadurch gekennzeichnet, dass der Antrieb wenigstens einen berührungslos arbeitenden elektrischen Linearmotor beinhaltet, dessen Antriebskraft auf das Trittbrett beispielsweise rein magnetisch (Lorenzkräfte oder Reluktanzkräfte) und ohne mechanische Verbindung, d.h. ohne Wirken von mechanischen Kräften übertragen wird. Die auf das Trittbrett wirkende Antriebskraft des berührungslos arbeitenden elektrischen Linearmotors ist dabei von der Führungskraft zu unterscheiden, welche zwischen der Führungseinrichtung und dem Trittbrett wirkt und unter Berührung, d.h. durch mechanische Kräfte aber auch ebenfalls berührungslos, z.B. durch Magnetkräfte erfolgen kann.

Dabei ist der wenigstens eine berührungslos arbeitende elektrische Linearmotor von einer elektronischen Steuer- oder Regeleinrichtung hinsichtlich einer durch das Trittbrett innerhalb des Fahrwegs anzufahrenden Position, zu erzielenden Geschwindigkeit, zu erzielenden Beschleunigung oder zu erzielenden Antriebskraft gesteuert oder geregelt.

Der berührungslos arbeitende elektrische Linearmotor kann beispielsweise mehrere linear aneinander gereihte Permanentmagnete und mehrere mit den Permanentmagneten berührungslos zusammen wirkende linear aneinander gereihte und von einer Steuerung bestromte Erregerspulen beinhalten, wobei die von den Permanentmagneten und von den Erregerspulen erzeugten Magnetfelder sich überlagern und Magnetkräfte erzeugen, welche das Trittbrett entlang des Fahrwegs bewegen. Folglich wird hier die Antriebskraft durch die Lorentzkraft erzeugt, wie bei magnetisch erregten elektrischen Antrieben üblich ist.

Alternativ kann der berührungslos arbeitende elektrische Linearmotor auch durch einen Reluktanzmotor gebildet werden, bei dem die Antriebskraft (ausschließlich) durch Reluktanzkraft und nicht zu wesentlichen Anteilen durch die Lorentzkraft erzeugt wird, wie die bei magnetisch erregten elektrischen Antrieben der Fall ist.

Der Vorteil dieser Maßnahmen liegt darin, dass bei einem solchen berührungslos arbeitenden elektrischen Linearmotor in der Regel größere geometrische Toleranzen zugelassen sind, welche ihn insbesondere unempfindlicher gegenüber Verwindungen und Verschmutzungen im Bereich der Schiebetrittanordnung machen. Die Schiebetrittanordnung wird dann in ihrer Funktion zuverlässiger und auch wartungsärmer.

Durch die in den Unteransprüchen aufgeführten Maßnahmen sind vorteilhafte Weiterbildungen und Verbesserungen der Erfindung möglich.

Wie oben bereits erwähnt beinhaltet der berührungslos arbeitende elektrischen Linearmotor mehrere linear aneinander gereihte Permanentmagnete und mehrere mit den Permanentmagneten berührungslos zusammen wirkende linear aneinander gereihte und von einer Steuerung bestromte Erregerspulen, wobei die von den Permanentmagneten und von den Erregerspulen erzeugten Magnetfelder sich überlagern und Magnetkräfte erzeugen, welche das Trittbrett entlang des Fahrwegs in beiden Richtungen bewegen können. Die Erregerspulen werden dabei von der elektronischen Steuerung in einer Weise bestromt, um resultierende Magnetkräfte zu erzeugen, welche das Trittbrett in der jeweils gewünschten Richtung, Geschwindigkeit und Beschleunigung bewegen.

Dabei kann insbesondere vorgesehen sein, dass
a) die mehreren linear aneinander gereihten Permanentmagnete (Läufer) an dem Trittbrett und die mehreren linear aneinander gereihten Erregerspulen (Stator) an einem stationären Tragbereich, oder dass
b) die mehreren linear aneinander gereihten Permanentmagnete (Stator) an dem stationären Tragbereich und die mehreren linear aneinander gereihten Erregerspulen am Trittbrett (Läufer) angeordnet sind.

Der stationäre Tragbereich der Schiebetrittanordnung ist beispielsweise an einem Wagenkasten des Fahrzeugs oder Schienenfahrzeugs direkt oder indirekt befestigt oder bildet einen Teil von diesem.

Insbesondere sind die mehreren linear aneinander gereihten Permanentmagnete derart angeordnet und die Steuerung bestromt die mehreren linear aneinander gereihten Erregerspulen derart, dass das Trittbrett durch die Magnetkräfte in die gewünschte Richtung gezogen und/oder gedrückt bzw. in der gewünschten Position gehalten wird. Die Permanentmagneten und/oder die Erregerspulen sind bevorzugt in jeweils einer Ebene angeordnet, wobei die Ebenen parallel zueinander sind und sich wenigstens teilweise überdecken. Die Reihen der Permanentmagneten und der Erregerspulen sind insbesondere parallel.

Gemäß einer Weiterbildung kann auch vorgesehen sein, dass die mehreren linear aneinander gereihten Permanentmagnete und die mehreren linear aneinander gereihten Erregerspulen derart angeordnet und/oder die mehreren linear aneinander gereihten Erregerspulen derart bestromt sind, dass die Magnetkräfte abhängig von der Position des Trittbretts auf dem Fahrweg sind Daher wird die auf das Trittbrett wirkende Antriebskraft abhängig von der Position des Trittbretts auf dem Fahrweg variiert bzw. ist die Antriebskraft eine Funktion der Positionen des Trittbretts auf dem Fahrweg.

Beispielsweise kann gefordert werden, dass die Antriebskraft zum Ausfahren des Trittbretts aus der eingefahrenen Position in die ausgefahrene Position in der eingefahrenen Position größer ist als auf dem restlichen Fahrweg, um z.B. hohe Losbrechkräfte infolge Verzwängung oder Vereisung im Bereich der Führungseinrichtung zu überwinden.

In besonders bevorzugter Weise kann wenigstens eine Erregerspule der mehreren Erregerspulen Bestandteil eines Kraftsensors sein, welcher die auf das Trittbrett wirkende Belastung direkt oder indirekt misst. Dann hat wenigstens eine der mehreren Erregerspulen eine vorteilhafte Doppelfunktion, indem sie einerseits für das Zustandekommen der Antriebskraft und andererseits als Bestandteil des Kraftsensors dient. Als Kraftsensor, welcher eine Spule beinhaltet kommt beispielsweise ein Hallsensor in Frage. Äquivalentes gilt für wenigstens einen Permanentmagneten.

Der Fahrweg des Trittbretts ist nicht auf einen geraden Fahrweg beschränkt. Vielmehr kann das Trittbrett durch die Führungseinrichtung auch entlang eines ganz oder teilweise gebogenen Fahrwegs geführt sein.

Die Führungseinrichtung ist bevorzugt in einer Schiebetrittkassette angeordnet, aus welcher das Trittbrett ein- und ausfahrbar ist, wobei der wenigstens eine berührungslos arbeitende elektrische Linearmotor wenigstens teilweise in der Schiebetrittkassette angeordnet ist.

Die Erfindung betrifft auch ein Fahrzeug, insbesondere ein Schienenfahrzeug mit wenigstens einer oben beschriebenen Schiebetrittanordnung.

### Zeichnung

Die Erfindung wird nachstehend anhand eines Ausführungsbeispielsunter Bezugnahme auf die beigefügte Zeichnung näher beschrieben. Es zeigen:
- Fig.1: eine Draufsicht auf eine Schiebetrittanordnung eines Schienenfahrzeugs gemäß einer bevorzugten Ausführungsform der Erfindung;
- Fig.2: eine Vorderansicht der Schiebetrittanordnung von Fig.1;
- Fig.3: eine Prinzipdarstellung eines Linearmotors, wie er bevorzugt in der Schiebetrittanordnung von Fig.1 und Fig.2 verwendet wird.

### Beschreibung der Ausführungsbeispiele

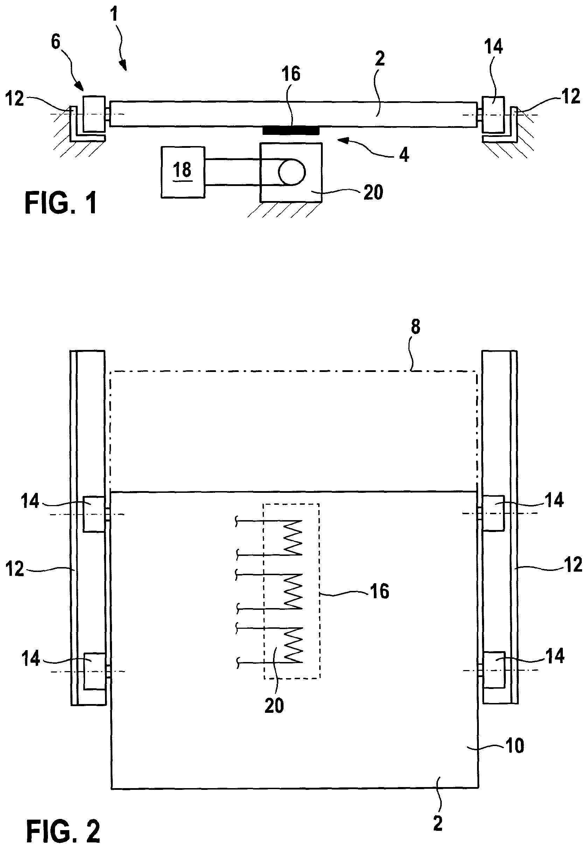

Die in **Fig.1** bis **Fig.3** gezeigte bevorzugte Ausführungsform einer Schiebetrittanordnung 1 wird beispielsweise in einem Schienenfahrzeug für Personenbeförderung verwendet.

Die Schiebetrittanordnung 1 beinhaltet beispielsweise eine hier nicht dargestellte eine Schiebetrittkassette, aus welcher ein Trittbrett 2 mittels eines berührungslos arbeitenden elektrischen Linearmotors 4 entlang eines hier beispielsweise geraden linearen Fahrwegs ein- und ausfahrbar ist. Das Trittbrett 2 ist durch eine hier lineare Führungseinrichtung 6 gegenüber der an einem Wagenkasten des Schienenfahrzeugs beispielsweise bodenseitig angeordneten Schiebetrittkassette linear geführt.

Die Schiebetrittkassette bildet einen stationären Tragbereich der Schiebetrittanordnung und ist an dem Wagenkasten des Schienenfahrzeugs direkt oder indirekt befestigt oder bildet einen Teil von diesem. Das Trittbrett 2 kann zwischen einer eingefahrenen, in **Fig.2** durch eine strichpunktierte Linie symbolisierte Position 8 und einer in **Fig.2** durch eine durchgezogene Linie symbolisierte ausgefahrene Position 10 entlang des Fahrwegs verfahren werden, wobei die eingefahrene Position im Fahrzustand des Schienenfahrzeugs eine Halteposition und die ausgefahrene Position bei einem Stopp mit Personenzu- und -ausstieg eine weitere Halteposition darstellt, d.h. eine Position, in welcher das Trittbrett zumindest temporär gehalten wird. Insofern stellen die eingefahrene Position 8 und die ausgefahrene Position 10 jeweils Extrempositionen des Fahrwegs dar. Insbesondere sind aber auch Zwischenpositionen zwischen den beiden Extrempositionen8, 10 als Halteposition möglich.

Die Führungseinrichtung 6 beinhaltet hier beispielsweise ein Paar von in der Schiebetrittkassette angeordneten Führungsschienen 12, in welchen insbesondere seitlich am Trittbrett 2 rotatorisch gelagerte Rollen 14 abrollen können. Der Antrieb des Trittbretts 2 gegenüber der Schiebetrittkassette erfolgt durch den berührungslos arbeitenden elektrischen Linearmotor 4, wobei der berührungslos arbeitende elektrische Linearmotor 4 je nach Position des Trittbretts wenigstens teilweise in der Schiebetrittkassette angeordnet ist.

Der berührungslos arbeitende elektrische Linearmotor 4 kann hier beispielsweise mehrere linear aneinander gereihte Permanentmagnete 16 und mehrere mit den Permanentmagneten 16 berührungslos zusammen wirkende linear aneinander gereihte und von einer elektronischen Steuerung 18 bestromte Erregerspulen 20 beinhalten.

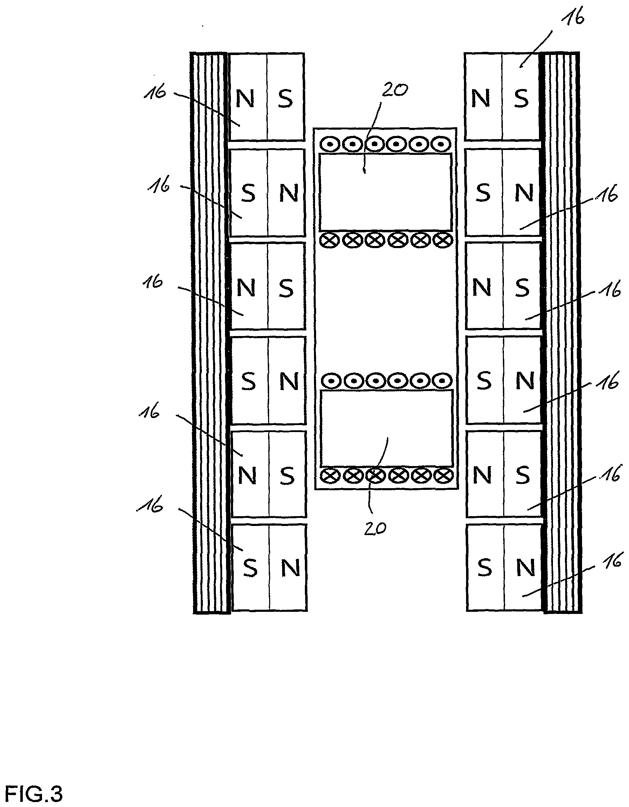

Im Beispiel von **Fig.3** sind vorzugsweise zwei parallele Reihen von Permanentmagneten 16 jeweils mit Nord- und Südpol in einer Ebene hintereinander angeordnet. In der linearen Aneinanderreihung der Permanentmagneten 16 stehen sich bevorzugt gegenpolige Abschnitte gegenüber. Im vorliegenden Fall sind beispielsweise zwei ebenfalls linear hintereinander gereihte Erregerspulen 20 vorhanden, wobei sich die Magnetfelder der Permanentmagneten 16 und der Erregerspulen 20 wenigstens teilweise überdecken. Die linearen Reihen der Permanentmagneten 16 und der Erregerspulen 20 sind insbesondere parallel.

Hier ist insbesondere vorgesehen sind, dass die Permanentmagnete (Läufer) 16 an dem Trittbrett und die Erregerspulen (Stator) 20 an der Schiebetrittkassette angeordnet sind. Alternativ könnten die Permanentmagnete (Stator) 16 an der der Schiebetrittkassette und die Erregerspulen 20 am Trittbrett (Läufer) angeordnet sein.

Wie **Fig.1** zeigt, sind die Permanentmagneten 16 und die Erregerspulen 20 bevorzugt in jeweils einer Ebene angeordnet, wobei die Ebenen parallel zueinander sind und sich wenigstens teilweise überdecken. Die von den Permanentmagneten 16 und von den Erregerspulen 20 erzeugten Magnetfelder überlagern sich und erzeugen Magnetkräfte, welche das Trittbrett 2 entlang des Fahrwegs bewegen. Folglich wird hier die Antriebskraft durch die Lorentzkraft erzeugt, wie bei magnetisch erregten elektrischen Antrieben üblich ist.

Alternativ kann der berührungslos arbeitende elektrische Linearmotor 4 auch durch einen Reluktanzmotor gebildet werden, bei dem die Antriebskraft (ausschließlich) durch Reluktanzkraft und nicht zu wesentlichen Anteilen durch die Lorentzkraft erzeugt wird, wie die bei magnetisch erregten elektrischen Antrieben der Fall ist.

Die Erregerspulen 20 werden von einer elektronischen Steuerung 18 in einer Weise bestromt, um resultierende Magnetkräfte zu erzeugen, welche das Trittbrett 2 in der jeweils gewünschten Richtung, Geschwindigkeit und Beschleunigung entlang des Fahrwegs bewegen. Insbesondere sind die Permanentmagnete 16 derart angeordnet und die Erregerspulen 20 durch die elektronische Steuerung 18 derart bestromt, dass das Trittbrett 2 durch die resultierenden Magnetkräfte in die gewünschte Richtung gezogen und/oder gedrückt wird.

Dabei kann auch kann vorgesehen sein, dass die Permanentmagnete 16 und die Erregerspulen 20 derart angeordnet und/oder die Erregerspulen 20 derart bestromt sind, dass die Magnetkräfte abhängig von der Position des Trittbretts 2 auf dem Fahrweg ist. Dann wird die auf das Trittbrett 2 wirkende Antriebskraft abhängig von der Position des Trittbretts 2 auf dem Fahrweg variiert bzw. ist die Antriebskraft für das Trittbrett 2 eine Funktion der Position des Trittbretts 2 auf dem Fahrweg.

Beispielsweise kann gefordert werden, dass die Antriebskraft zum Ausfahren des Trittbretts 2 aus der eingefahrenen Position 8 in die ausgefahrene Position 10 im Bereich der eingefahrenen Position 8 größer ist als auf dem restlichen Fahrweg, um z.B. hohe Losbrechkräfte infolge Verzwängung oder Vereisung im Bereich der Führungseinrichtung 6 zu überwinden.

Generell kann der wenigstens eine berührungslos arbeitende elektrische Linearmotor 4 von einer elektronischen Steuer- oder Regeleinrichtung hinsichtlich einer durch das Trittbrett 2 innerhalb des Fahrwegs anzufahrenden Position, zu erzielenden Geschwindigkeit, zu erzielenden Beschleunigung oder zu erzielenden Antriebskraft gesteuert oder geregelt sein. Insbesondere können im Rahmen einer Regelung Rückmeldesignale von Istwerten erzeugende Sensoren wie Weg-, Geschwindigkeits-, Beschleunigungs- oder Kraftsensoren vorgesehen sein.

Gemäß einer besonders bevorzugten Ausführungsform kann wenigstens eine Erregerspule der Erregerspulen 20 Bestandteil eines Kraftsensors sein, welcher die auf das Trittbrett 2 wirkende Belastung direkt oder indirekt misst. Als Kraftsensor, welcher eine Spule beinhaltet kommt beispielsweise ein Hallsensor in Frage.

Der Fahrweg des Trittbretts 2 ist nicht auf einen geraden Fahrweg beschränkt. Vielmehr kann das Trittbrett 2 durch die Führungseinrichtung 6 auch entlang eines ganz oder teilweise gebogenen Fahrwegs geführt sein.

Im Rahmen der Erfindung sind auch Ausführungen enthalten, welche beliebige Kombination von Merkmalen der hier beschriebenen Ausführungsformen enthalten.

### Bezugszeichenliste

- 1: Schiebetrittanordnung
- 2: Trittbrett
- 4: Linearmotor
- 6: Führungseinrichtung
- 8: eingefahrene Position
- 10: ausgefahrene Position
- 12: Führungsschienen
- 14: Rollen
- 16: Permanentmagneten
- 18: Steuerung
- 20: Erregerspulen

## Patentansprüche

1. Schiebetrittanordnung (1) für ein Fahrzeug oder ein Schienenfahrzeug, mit wenigstens einem Trittbrett (2), welches durch einen Antrieb (4) angetrieben an einer Führungseinrichtung (6) entlang eines Fahrwegs zwischen einer eingefahrenen Position (8) und einer ausgefahrenen Position (10) beweglich geführt ist, **dadurch gekennzeichnet, dass** der Antrieb (4) wenigstens einen berührungslos arbeitenden elektrischen Linearmotor beinhaltet, wobei dessen Antriebskraft auf das Trittbrett (2) ohne mechanische Verbindung übertragen wird, wobei der wenigstens eine berührungslos arbeitende elektrische Linearmotor (4) von einer elektronischen Steuer- oder Regeleinrichtung (18) hinsichtlich einer durch das Trittbrett (2) innerhalb des Fahrwegs anzufahrenden Position, zu erzielenden Geschwindigkeit, zu erzielenden Beschleunigung oder zu erzielenden Antriebskraft gesteuert oder geregelt ist.

2. Schiebetrittanordnung nach Anspruch 1, **dadurch gekennzeichnet, dass** der berührungslos arbeitende elektrischen Linearmotor (4) mehrere linear aneinander gereihte Permanentmagnete (16) und mehrere mit den Permanentmagneten (16) berührungslos zusammen wirkende linear aneinander gereihte und von einer Steuerung (18) bestromte Erregerspulen (20) beinhaltet, wobei die von den Permanentmagneten (16) und von den Erregerspulen (20) erzeugten Magnetfelder sich überlagern und Magnetkräfte erzeugen, welche das Trittbrett (2) entlang des Fahrwegs bewegen.

3. Schiebetrittanordnung nach Anspruch 2, **dadurch gekennzeichnet, dass**
a) die mehreren linear aneinander gereihten Permanentmagnete (16) an dem Trittbrett (2) und die mehreren linear aneinander gereihten Erregerspulen 20) an einem stationären Tragbereich, oder dass
b) die mehreren linear aneinander gereihten Permanentmagnete (16) an dem stationären Tragbereich und die mehreren linear aneinander gereihten Erregerspulen (20) am Trittbrett (2) angeordnet sind.

4. Schiebetrittanordnung nach Anspruch 2 oder 3, **dadurch gekennzeichnet, dass** die mehreren linear aneinander gereihten Permanentmagnete (16) derart angeordnet sind und die Steuerung (18) die mehreren linear aneinander gereihten Erregerspulen (20) derart bestromt, dass das Trittbrett (2) durch die Magnetkräfte in die gewünschte Richtung gezogen und/oder gedrückt wird.

5. Schiebetrittanordnung nach einem der Ansprüche 2 bis 4, **dadurch gekennzeichnet, dass** die mehreren linear aneinander gereihten Permanentmagnete (16) und die mehreren linear aneinander gereihten Erregerspulen (20) derart angeordnet und/oder die mehreren linear aneinander gereihten Erregerspulen (20) durch die Steuerung (18) derart bestromt sind, dass die Magnet- oder Antriebskräfte abhängig von der Position des Trittbretts (2) auf dem Fahrweg sind.

6. Schiebetrittanordnung nach einem der Ansprüche 2 bis 4, **dadurch gekennzeichnet, dass** wenigstens eine Erregerspule der mehreren Erregerspulen (20) Bestandteil eines Kraftsensors ist, welcher die auf das Trittbrett (2) wirkende Belastung direkt oder indirekt misst.

7. Schiebetrittanordnung nach einem der vorhergehenden Ansprüche, **dadurch gekennzeichnet, dass** der berührungslos arbeitende elektrische Linearmotor (4) durch einen Reluktanzmotor gebildet wird.

8. Schiebetrittanordnung nach einem der vorhergehenden Ansprüche, **dadurch gekennzeichnet, dass** das Trittbrett (2) durch die Führungseinrichtung (6) entlang eines geraden und/oder gebogenen Fahrwegs geführt ist.

9. Schiebetrittanordnung nach einem der vorhergehenden Ansprüche, **dadurch gekennzeichnet, dass** die Führungseinrichtung (6) in einer Schiebetrittkassette angeordnet ist, aus welcher das Trittbrett (2) ein- und ausfahrbar ist, wobei der wenigstens eine berührungslos arbeitende elektrische Linearmotor (4) wenigstens teilweise in der Schiebetrittkassette angeordnet ist.

10. Fahrzeug, insbesondere Schienenfahrzeug mit wenigstens einer Schiebetrittanordnung (1) nach einem der vorhergehenden Ansprüche.

## Claims

1. A retractable step arrangement (1) for a vehicle or a rail vehicle having at least one footboard (2) that is mounted on a guide device (6) such that it is able, when driven by a drive (4), to move along a path of travel between a retracted position (8) and an extended position (10), **characterised in that** the drive (4) comprises at least one contactlessly operating linear electric motor, the drive force of this motor being transmitted to the footboard (2) without a mechanical connection, the at least one contactlessly operating linear electric motor (4) being controlled or regulated as regards a position on the path of travel to be assumed by the footboard (2), a speed to be achieved, an acceleration to be achieved or the drive force to be achieved by an electronic control or regulating device (18).

2. A retractable step arrangement according to claim 1, **characterised in that** the contactlessly operating linear electric motor (4) comprises a plurality of permanent magnets (16) aligned one after another in a row and plurality of exciter coils (20) aligned one after another in a row that interact contactlessly with the permanent magnets (16) and are electrically energised by a control system (18), the magnetic fields generated by the permanent magnets (16) and the exciter coils (20) overlapping and generating magnetic forces that move the footboard (2) along the path of travel.

3. A retractable step arrangement according to claim 2, **characterised in that**
a) the plurality of permanent magnets (16) aligned one after another in a row is arranged on the footboard (2) and the plurality of exciter coils (20) aligned one after another in a row is arranged on a static support region, or **in that**
b) the plurality of permanent magnets (16) which are lined up with one another in a linear row is arranged on the static support region and the plurality of exciter coils (20) aligned one after another in a row is arranged on the footboard (2).

4. A retractable step arrangement according to claim 2 or 3, **characterised in that** the plurality of permanent magnets (16) aligned one after another in a row is arranged in such a manner and that the control system (18) electrically energises the plurality of exciter coils (20) aligned one after another in a row in such a manner that the footboard (2) is pulled and/or pushed in the desired direction by the magnetic forces.

5. A retractable step arrangement according to any of claims 2 to 4, **characterised in that** the plurality of permanent magnets (16) aligned one after another in a row and the plurality of exciter coils (20) aligned one after another in a row are arranged in such a manner and/or that the plurality of exciter coils (20) aligned one after another in a row is electrically energised by the control system (18) in such a manner that the magnetic or drive forces are dependent on the position of the footboard (2) on the path of travel.

6. A retractable step arrangement according to any one of claims 2 to 4, **characterised in that** at least one exciter coil of the plurality of exciter coils (20) is a constituent part of a force sensor that directly or indirectly measures the load acting on the footboard (2).

7. A retractable step arrangement according to any one of the preceding claims, **characterised in that** the contactlessly operating linear electric motor (4) takes the form of a reluctance motor.

8. A retractable step arrangement according to any one of the preceding claims, **characterised in that** the footboard (2) is guided along a straight and/or curved path of travel by the guide device (6).

9. The retractable step arrangement according to any of the preceding claims, **characterised in that** the guide device (6) is arranged in a retractable step casing from which the footboard (2) can be retracted and extended, the at least one contactlessly operating linear electric motor (4) being arranged at least partially inside the retractable step casing.

10. A vehicle, in particular a rail vehicle, having at least one retractable step arrangement (1) according to any one of the preceding claims.

## Revendications

1. Agencement (1) de marchepied coulissant d'un véhicule ou d'un véhicule ferroviaire, comprenant au moins une marche (2), qui, entraînée par un entraînement (4), est guidée en étant mobile sur un dispositif (6) de guidage le long d'un chemin de déplacement entre une position (8) escamotée et une position (10) déployée, **caractérisé en ce que** l'entraînement (4) comporte au moins un moteur électrique linéaire fonctionnant sans contact, dont la force d'entraînement est transmise sans liaison mécanique à la marche (2), le au moins un moteur (4) électrique linéaire fonctionnant sans contact étant commandé ou régulé par un dispositif (18) électronique de commande ou de régulation en ce qui concerne une position à prendre par la marche (2) dans le chemin de déplacement, la vitesse à atteindre, l'accélération à atteindre ou la force d'entraînement à atteindre.

2. Agencement de marchepied coulissant suivant la revendication 1, **caractérisé en ce que** le moteur (4) électrique linéaire fonctionnant sans contact comporte plusieurs aimants (16) permanents rangés linéairement les uns à côté des autres et plusieurs bobines (20) d'excitation, coopérant sans contact avec les aimants (16) permanents, rangées linéairement les unes à côté des autres et alimentées en courant par une commande (18), le champs magnétiques produits par les aimants (16) permanents et par les bobines (20) d'excitation se superposant et produisant des forces magnétiques, qui déplacent la marche (2) le long du chemin de déplacement.

3. Agencement de marchepied coulissant suivant la revendication 2, **caractérisé en ce que**
a) les plusieurs aimants (16) permanents rangés linéairement les uns à côté des autres sont disposés sur la marche (2) et les plusieurs bobines d'excitation rangées linéairement les unes à côté des autres sont disposées sur une partie porteuse fixe, ou **en ce que**
b) les plusieurs aimants (16) permanents rangés linéairement les uns à côté des autres sont disposés sur la partie porteuse fixe et les plusieurs bobines (20) d'excitation rangées linéairement les unes à côté des autres sont disposées sur la marche (2).

4. Agencement de marchepied coulissant suivant la revendication 2 ou 3, **caractérisé en ce que** les plusieurs aimants (16) permanents rangés linéairement les uns à côté des autres sont disposés et la commande (18) alimente en courant les plusieurs bobines (20) d'excitation rangées linéairement les unes à côté des autres, de manière à tirer et/ou pousser la marche (2) par les forces magnétiques dans le sens souhaité.

5. Agencement de marchepied coulissant suivant l'une des revendications 2 à 4, **caractérisé en ce que** les plusieurs aimants (16) permanents rangés linéairement les uns à côté des autres et les plusieurs bobines (20) d'excitation rangées linéairement les unes à côté des autres sont disposés et/ou les plusieurs bobines (20) d'excitation rangées linéairement les unes à côté des autres sont alimentées en courant par la commande (18), de manière à ce que les forces magnétiques ou d'entraînement dépendent de la position de la marche (2) sur le chemin de déplacement.

6. Agencement de marchepied coulissant suivant l'une des revendications 2 à 4, **caractérisé en ce qu'**au moins une bobine d'excitation parmi les plusieurs bobines (20) d'excitation fait partie d'un capteur de force, qui mesure directement ou indirectement la charge s'appliquant à la marche (2).

7. Agencement de marchepied coulissant suivant l'une des revendications précédentes, **caractérisé en ce que** le moteur (4) électrique linéaire fonctionnant sans contact est formé d'un moteur à réluctance.

8. Agencement de marchepied coulissant suivant l'une des revendications précédentes, **caractérisé en ce que** la marche (2) est guidée par le dispositif (6) de guidage le long d'un chemin de déplacement rectiligne et/ou curviligne.

9. Agencement de marchepied coulissant suivant l'une des revendications précédentes, **caractérisé en ce que** le dispositif (6) de guidage est disposé dans une cassette de marchepied coulissant, dans laquelle la marche (2) peut rentrer et dont elle peut sortir, le au moins un moteur (4) électrique linéaire fonctionnant sans contact étant disposé, au moins en partie, dans la cassette de marchepied.

10. Véhicule, notamment véhicule ferroviaire ayant au moins un agencement (1) de marchepied suivant l'une des revendications précédentes.
